# EUROPÄISCHE PATENTSCHRIFT

(11) **EP 1 900 586 B1**
(45) Veröffentlichungstag und Bekanntmachung des Hinweises auf die Patenterteilung: **26.06.2013**
(21) Anmeldenummer: 07113708.7
(22) Anmeldetag: 02.08.2007
(51) Int. Cl.: B60W 10/06, B60W 10/18, B60W 30/14, B60W 30/16, B60K 35/00, B60K 37/00

(54) **Abstandsregelvorrichtung mit Zielobjektanzeige**
Device for distance control with target object display
Dispositif de régulation de distance doté d'un affichage de l'objet cible

(30) Priorität: 14.09.2006 DE 102006043091
(43) Veröffentlichungstag der Anmeldung: 19.03.2008
(73) Patentinhaber: ROBERT BOSCH GMBH, 70442 Stuttgart (DE)
(72) Erfinder: Kaller, Jochen, Yokohama-shi Kanagawa 225-0016 (JP); John, Dirk, 71272 Renningen (DE)

(56) Entgegenhaltungen:
- EP-A- 1 245 427
- EP-A- 1 480 054
- WO-A-01/40011
- WO-A-2005/037592
- US-A- 5 230 400

## Beschreibung

### Stand der Technik

Die Erfindung betrifft eine Abstandsregelvorrichtung für Kraftfahrzeuge, mit einem Ortungssystem zur Ortung vorausfahrender Fahrzeuge, einem Erfassungsmodul zur Erfassung eines georteten Fahrzeugs als Zielobjekt für die Abstandsregelung, einem Regler zur Regelung des Abstands zum Zielobjekt, und einer Anzeigeeinrichtung mit zugehöriger Steuereinrichtung zur Anzeige eines erfaßten Zielobjekts, wobei die Steuereinrichtung dazu ausgebildet ist, den Abstand des Zielobjekts und mindestens einen weiteren vom Ortungssystem gemessenen dynamischen Parameter des Zielobjekts auszuwerten.

Solche Abstandsregelvorrichtungen, die auch als ACC-Systeme (Adaptive Cruise Control) bezeichnet werden, sind bereits in zahlreichen Kraftfahrzeugen im Einsatz. Das Ortungssystem wird üblicherweise durch einen Radarsensor mit relativ großer Ortungstiefe gebildet, der in der Lage ist, vorausfahrende Fahrzeuge bereits in einem relativ großen Abstand zu orten und deren Abstand, Relativgeschwindigkeit und Azimutwinkel zu messen. Anhand des Azimutwinkels wird für jedes geortete Fahrzeug geprüft, ob es der von dem eigenen Fahrzeug befahrenen Spur der Fahrbahn oder einer Nebenspur zuzuordnen ist. Bei gekrümmter Fahrbahn wird die Fahrbahnkrümmung berücksichtigt, die sich beispielsweise anhand der Gierrate des eigenen Fahrzeugs abschätzen läßt.

Unter den georteten Fahrzeugen identifiziert das Erfassungsmodul das auf der eigenen Fahrspur unmittelbar vorausfahrende Fahrzeug, und wenn dessen Abstand kleiner ist als ein vorgegebener Maximalabstand, der von der Fahrgeschwindigkeit des eigenen Fahrzeugs und gegebenenfalls von der Kurvigkeit der Fahrbahn abhängig ist, wird dieses Fahrzeug als Zielobjekt für die Abstandsregelung erfaßt, und seine dynamischen Daten werden als Grundlage für die Abstandsregelung an den Regler übergeben. Durch Eingriff in das Antriebssystem und gegebenenfalls das Bremssystem des Fahrzeugs wird die Geschwindigkeit des eigenen Fahrzeugs dann vom Regler so angepaßt, daß das Zielobjekt in einem angemessenen Sicherheitsabstand verfolgt wird. Dieser Sicherheitsabstand ist geschwindigkeitsabhängig und ist über die Zeitlücke zwischen den beiden Fahrzeugen identifiziert. Zumeist kann der Fahrer diese Zeitlücke innerhalb gewisser Grenzen wählen. In Freifahrt, d. h., wenn kein Zielobjekt vorhanden ist, wird die Geschwindigkeit durch den Regler auf eine vom Fahrer vorgegebene Setzgeschwindigkeit geregelt.

Die Anzeigeeinrichtung dient dazu, dem Fahrer die beiden Betriebszustände Freifahrt und Folgefahrt (Verfolgung eines Zielobjekts) transparent zu machen. Dies geschieht bisher in der Weise, daß auf dem Armaturenbrett des Fahrzeugs oder gegebenenfalls auch in einem Head-Up Display, das ein Anzeigebild in die Windschutzscheibe des Fahrzeugs projiziert, ein Symbol aufleuchtet, sobald das Erfassungsmodul ein Zielobjekt erfaßt und an den Regler gemeldet hat.

Aus dem gattungsbildenden Dokument EP-A-1 480 054 ist eine Abstandsregelvorrichtung nach dem Oberbegriff des Anspruchs 1 bekannt, bei der die Steuereinrichtung für die Anzeigeeinrichtung dazu ausgebildet ist, die aktuelle Fahrsituation, einschließlich Einschervorgängen vorausfahrender Fahrzeuge für den Fahrer zu visualisieren.

WO 2005/037592 A beschreibt ein System zur Erkennung von Spurwechselvorgängen vorausfahrender Fahrzeuge.

### Offenbarung der Erfindung

Aufgabe der Erfindung ist es, die Anzeige des Zielobjekts für den Fahrer transparenter und plausibler zu machen.

Diese Aufgabe wird dadurch gelöst, daß der weitere dynamische Parameter oder einer der weiteren dynamischen Parameter die Relativgeschwindigkeit oder die Relativbeschleunigung des Zielobjekts ist und daß die Steuereinrichtung dazu ausgebildet ist, das Zielobjekt, nur dann anzuzeigen, wenn diese Parameter ein vorgegebenes Anzeigekriterium erfüllen, das darauf hindeutet, dass im Rahmen der Abstandregelung winkelich ein Regeleingriff stafffindet oder kurz bevorsteht.

Auf diese Weise läßt sich erreichen, daß das Zielobjekt dem Fahrer nur dann angezeigt wird, wenn es auch wirklich für die Abstandsregelung relevant ist. Der Maximalabstand, den ein in der eigenen Spur vorausfahrendes Fahrzeug höchstens haben darf, damit es als Zielobjekt erfaßt wird, ist nämlich aus Sicherheitsgründen so groß gewählt, daß bei Erfassung des Zielobjekts in vielen Fällen noch nicht sofort eine Anpassung der Geschwindigkeit erforderlich ist. Vielmehr wird zunächst nur die Dynamik des Zielobjekts verfolgt, und erst wenn der Abstand unter einen von der Relativgeschwindigkeit des Zielobjekts abhängigen Wert abnimmt, wird das eigene Fahrzeug verzögert, um seine Geschwindigkeit an die des Zielobjekts anzupassen.

Bei herkömmlichen ACC-Systemen hat dies beispielsweise in einer Situation, in der die vom Fahrer gewählte Setzgeschwindigkeit annähernd mit der Absolutgeschwindigkeit des Zielobjekts übereinstimmt, zur Folge, daß dem Fahrer das Zielobjekt bereits angezeigt wird, lange bevor durch den Regler eine Reaktion auf das Zielobjekt erfolgt. Dies wird vom Fahrer vielfach als störend oder irritierend empfunden. Besonders störend ist es, wenn das Zielobjekt mit ungleichförmger Geschwindigkeit fährt, so daß sein Abstand um den Maximalabstand für die Erfassung als Zielobjekt pendelt, mit der Folge, daß die Zielobjektanzeige abwechselnd aufleuchtet und wieder erlischt. Mit der erfindungsgemäßen Abstandsregelvorichtung läßt sich dieser Nachteil vermeiden, da die Steuereinrichtung die Zielobjektanzeige erst dann aktiviert, wenn die dynamischen Parameter des Zielobjekts so beschaffen sind, daß tatsächlich eine Abstandsregelung erfolgt oder zumindest kurz bevorsteht.

Eine andere typische Situation, in der sich die Erfindung als vorteilhaft erweist, ist eine Fahrt auf einer relativ kurvenreichen Landstraße. Aufgrund der auf Landstraßen geltenden allgemeinen Geschwindigkeitsbegrenzung (in Deutschland 100 km/h) laufen Annährungsprozesse zwischen Fahrzeugen hier zumeist sehr langsam. Das hat auf kurvigen Strecken zur Folge, daß ein bereits in großem Abstand als Zielobjekt erfaßtes Fahrzeug in der nächsten Kurve wieder aus dem Ortungsbereich des Radarsensors verschwindet und dann auf einem nachfolgenden geraden Streckenabschnitt erneut erfaßt wird. Dies kann sich mehrmals wiederholen, so daß es bei einem herkömmlichen ACC-System auch hier zu einem irritierenden Flackern der Zielobjektanzeige kommt. Durch die Erfindung wird dieser Effekt gemildert, da das Zielobjekt im allgemeinen erst in einer geringeren Entfernung angezeigt werden wird.

In anderen Situationen, beispielsweise bei relativ rascher Annäherung an ein Zielobjekt, werden dagegen die dynamischen Parameter im allgemeinen so beschaffen sein, daß die Anzeige des Zielobjekts bereits kurz nach oder unmittelbar bei der Zielobjekterfassung erfolgt, so daß die Erfindung insoweit keine nachteiligen Auswirkungen hat und den Fahrer rechtzeitig über den Eintritt in den Folgefahrtmodus informiert. Da bei hoher Relativgeschwindigkeit der Abstand zum Zielobjekt rasch kleiner wird, ist in dieser Situation ein "Flackern" der Zielobjektanzeige unwahrscheinlich.

Nur so läßt sich durch die Erfindung erreichen, daß störende oder irritierende Anzeigen vermieden werden und der Fahrer in angemessenerer Form über den wahren Zustand der Abstandsregelvorrichtung informiert wird.

Vorteilhafte Ausgestaltungen und Weiterbildungen sind in den Unteransprüchen angegeben.

Die Auswertung in der Anzeigesteuerung kann sich ganz oder teilweise auf die Verarbeitungsprozesse stützen, die ohnehin im Regler ablaufen. Beispielsweise kann zu diesem Zweck die vom Regler aufgrund der dynamischen Daten des Zielobjekts berechnete Sollbeschleunigung herangezogen und mit der Sollbeschleunigung verglichen werden, die unter sonst gleichen Bedingungen für eine Freifahrtsituation gelten würde und zumeist ebenfalls fortlaufend von einem Freifahrtmodul des Reglers berechnet wird.

Darüber hinaus ist es zweckmäßig, den gemessenen Abstand des Zielobjekts direkt auszuwerten und das Anzeigekriterium so zu definieren, daß das Zielobjekt auf jeden Fall angezeigt wird, wenn sein Abstand kleiner ist als ein Minimalabstand, der vom Maximalabstand für die Zielobjekterfassung (und ggf. weiteren Parametern) abhängig ist. Beispielsweise kann der Mindestabstand sich von dem Maximalabstand um einen festen Betrag unterscheiden oder proportional zu diesem sein oder auch die Summe aus einem konstanten Anteil und einem proportionalen Anteil sein.

In einer anderen Ausführungsform könnte der Mininimalabstand als Funktion der dynamischen Parameter, insbesondere der Relativgeschwindigkeit und gegebenenfalls der Relativbeschleunigung des Zielobjekts variiert werden, und das Anzeigekriterium könnte dann allein darin bestehen, daß der Abstand des Zielobjekts den Mininimalabstand unterschreitet.

Um ein Flackern der Anzeige zu vermeiden, erfolgt das Ein- und Ausschalten vorzugsweise mit einer gewissen Hysterese. In einer besonders vorteilhaften Ausführungsform wird der zeitliche Verlauf des Zielobjektabstands verfolgt, und lokale Minima dieses Abstands werden gespeichert und mit dem aktuellen Abstand verglichen.

Wenn bei niedrigem Zielobjektabstand die Zielobjektanzeige einmal eingeschaltet wurde, wird sie erst dann wieder ausgeschaltet, wenn der Zielobjektabstand das Minimum durchlaufen hat und wieder um einen bestimmten Hysteresebetrag über dem zuletzt gespeicherten Minimum liegt. Auf diese Weise ist z. B. auch sichergestellt, daß die Anzeige eingeschaltet bleibt, wenn der Fahrer während der Annäherung an das Zielobjekt die Zeitlücke oder die Setzgeschwindigkeit verringert.

In einer modifizierten Ausführungsform kann die Steuereinrichtung für die Zielobjektanzeige mit dem Erfassungsmodul kombiniert sein und den Maximalabstand für die Erfassung eines Fahrzeugs als Zielobjekt in Abhängigkeit von anderen dynamischen Parametern variieren, beispielsweise in Abhängigkeit von der Geschwindigkeit des eigenen Fahrzeugs und der Relativgeschwindigkeit (und gegebenenfalls Beschleunigung) des Zielobjekts. Da in diesem Fall bereits die Erfassung eines Fahrzeugs als Zielobjekt von mehreren dynamischen Parametern abhängig ist, kann die Anzeige des Zielobjekts zeitgleich mit der Erfassung erfolgen, d. h., das Anzeigekriterium ist identisch mit dem Kriterium für die Zielobjekterfassung. Alternativ ist es jedoch auch in dieser Ausführungsform möglich, für die Zielobjektanzeige ein besonderes Kriterium zu definieren.

### Kurze Beschreibung der Zeichnungen

Ein Ausführungsbeispiel der Erfindung ist in den Zeichnungen dargestellt und in der nachfolgenden Beschreibung näher erläutert.

### Es zeigen:

- Figur 1: ein Blockdiagramm einer Abstandsregelvorrichtung gemäß der Erfindung;
- Figur 2: eine Skizze zur Illustration der Funktionsweise der Vorrichtung in unterschiedlichen Verkehrssituationen; und
- Figur 3: ein Flußdiagramm zur Erläuterung der Arbeitsweise der Vorrichtung.

### Ausführungsform der Erfindung

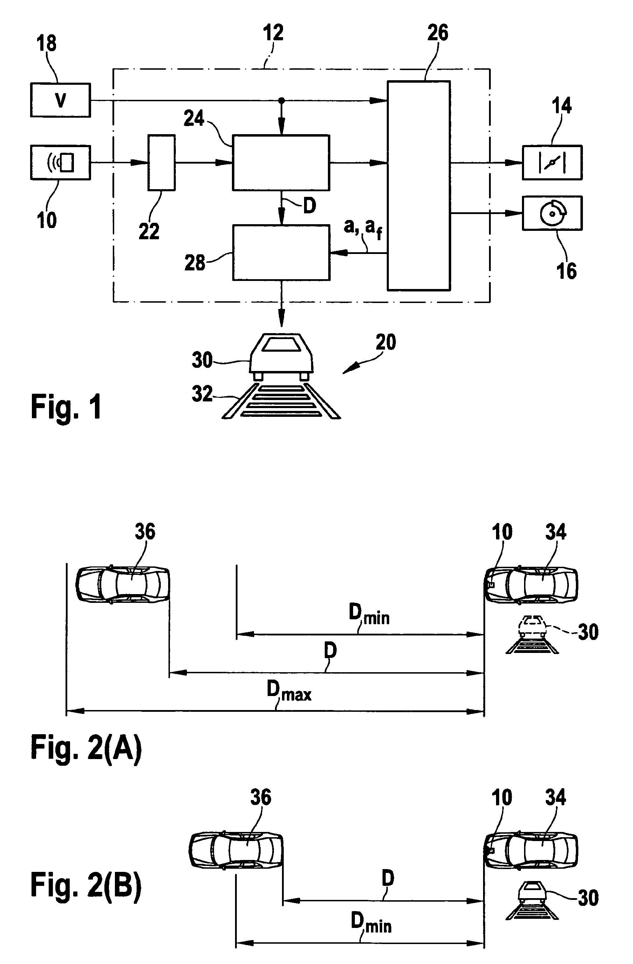

Die in Figur 1 gezeigte Abstandsregelvorrichtung für ein Kraftfahrzeug umfaßt ein Ortungssystem 10, beispielsweise in der Form eines Radarsensors, der vom im Fahrzeug eingebaut ist und Fahrzeuge sowie andere Objekte im Vorfeld ortet, ein elektronisches Datenverarbeitungssystem 12 und Aktoren 14, 16 für den Eingriff in das Antriebssystem bzw. das Bremssystem des Fahrzeugs. Weitere sensorische Komponenten 18 liefern ergänzende Daten, die für die Regelung benötigt werden, insbesondere die Geschwindigkeit V des "eigenen" Fahrzeugs, d. h., des Fahrzeugs, das mit der Abstandsregelvorrichtung ausgerüstet ist.

Weiterhin gehört zu der Vorrichtung eine Anzeigeeinheit 20, die dazu dient, den Fahrer über den aktuellen Betriebszustand der Abstandsregelvorrichtung zu informieren.

Das Datenverarbeitungssystem 12 umfaßt mehrere Funktionsmodule, die als Softwaremodule oder auch auch spezialisierte Hardware ausgestaltet sein können.

Ein Eingangsmodul 22 dient zur Auswertung der vom Ortungssystem 10 gelieferten Daten. Insbesondere werden hier durch Auswertung der empfangenen Radarsignale die georteten Objekte identifiziert, und die Abstände, Relativgeschwindigkeiten und Azimutwinkel dieser Objekte werden in ihrer zeitlichen Entwicklung verfolgt und an die nachgeschalteten Module weitergeleitet.

Ein Erfassungsmodul 24 überprüft anhand dieser Daten, ob in der von dem eigenen Fahrzeug befahrenen Fahrspur mindestens ein vorausfahrendes Fahrzeug vorhanden ist, und erfaßt das unmittelbar vorausfahrende Fahrzeug, also das mit dem kleinsten Abstand, als Zielobjekt für die Abstandsregelung, sofern der Abstand dieses Fahrzeugs kleiner ist als ein vorgegebener Maximalabstand Dₘₐₓ, der von der Geschwindigkeit V des eigenen Fahrzeugs und gegebenenfalls von der Kurvigkeit der Fahrbahn abhängig ist.

Die Daten des erfaßten Zielobjekts werden dann an einen Regler 26 übergeben, der anhand dieser Daten und der Geschwindigkeit V des eigenen Fahrzeugs die eigentliche Abstands- und Geschwindigkeitsregelung vornimmt. Beispielsweise berechnet dieser Regler eine (positive oder negative) Sollbeschleunigung a, die erforderlich ist, damit das als Zielobjekt erfaßte Fahrzeug in einem vorgegebenen zeitlichen Abstand (Zeitlücke) verfolgt wird. Außerdem berechnet der Regler 26 eine Sollbeschleunigung a_{f} für den Fall, daß kein Zielobjekt erfaßt ist und die Geschwindigkeit des Fahrzeugs auf eine vom Fahrer gewählte Setzgeschwindigkeit zu regeln ist. Anhand einer Minimumauswahl zwischen diesen beiden Sollbeschleunigungen bestimmt der Regler dann die Ausgangssignale für die Ansteuerung der Aktoren 14, 16.

Als weiteres Funktionsmodul enthält das Datenverarbeitungssystem 12 eine Steuereinrichtung 28 und zur Ansteuerung der Anzeigeeinheit 20. Im gezeigten Beispiel umfaßt die Anzeigeeinheit 20 eine Anzeigeeinrichtung 30 in der Form einer Leuchtanzeige, die ein stilisiertes Fahrzeugheck darstellt und als Zielobjektanzeige dient, sowie eine Leuchtanzeige 32 in der Form eines stilisierten Fahrbahnabschnitts mit horizontalen Abstandsbalken, deren Anzahl über die derzeit vom Fahrer gewählte Zeitlücke Auskunft gibt.

Die als Zielobjektanzeige dienende Anzeigeeinrichtung 30 leuchtet nur unter der Bedingung auf, daß das Erfassungsmodul 24 ein Zielobjekt erfaßt hat. Bei der hier vorgeschlagenen Vorrichtung soll die Zielobjektanzeige den Fahrer jedoch speziell darüber informieren, daß das Zielobjekt nicht nur erfaßt wurde, sondern daß auch der Regler 26 im Begriff ist, auf dieses Zielobjekt zu reagieren. Zu diesem Zweck wertet die Steuereinrichtung 28 zum einen den vom Erfassungsmodul 24 gemeldeten Abstand D des Zielobjekts und zum anderen die vom Regler 26 berechneten Sollbeschleunigungen a und a_{f} aus. Diese Sollbeschleunigungen enthalten implizit Information über die dynamischen Parameter des Zielobjekts, insbesondere seine Relativgeschwindigkeit und gegebenenfalls Relativbeschleunigung.

In Figur 2 (A) sind das mit der Vorrichtung nach Figur 1 ausgerüstete (eigene) Fahrzeug 34 sowie ein vorausfahrendes Fahrzeug gezeigt, das als Zielobjekt 36 erfaßt wurde. Der Abstand D des Zielobjekts 36 ist kleiner als der Maximalabstand Dₘₐₓ. Dies ist die Voraussetzung dafür, daß das vorausfahrende Fahrzeug überhaupt vom Erfassungsmodul 24 als Zielobjekt erfaßt wurde.

Der Abstand D liegt hier in einem Intervall zwischen Dₘₐₓ und einem Minimalabstand Dₘᵢₙ, der von Dₘₐₓ abhängig ist und beispielsweise um einen festen Betrag kleiner ist als Dₘₐₓ. Unter diesen Umständen wird die Anzeigeeinrichtung 30 (Zielobjektanzeige) durch die Steuereinrichtung 28 nur dann aktiviert, wenn zusätzlich die Sollbeschleunigungen a und a_{f} ein bestimmtes Kriterium erfüllen, das darauf hindeutet, daß eine Reaktion des Reglers 26 auf das Zielobjekt 36 unmittelbar bevorsteht oder bereits eingetreten ist.

Wenn dagegen die vom Fahrer gewählte Setzgeschwindigkeit kleiner ist als die Fahrgeschwindigkeit des Zielobjekts 36, braucht der Regler 26 nicht auf das Zielobjekt zu reagieren, und die Ansteuerung der Aktoren 14, 16 beruht auf der für eine Freifahrtsituation berechneten Sollbeschleunigung a_{f}. Das gleiche gilt, wenn die Geschwindigkeit V des eigenen Fahrzeugs nur wenig größer ist als die Fahrgeschwindigkeit des Zielobjekts 36 und gleichzeitig der Abstand D noch relativ groß ist.

In diesem Fällen bleibt die Zielobjektanzeige ausgeschaltet, weshalb die Anzeigeeinrichtung 30 in Figur 2(A) nur gestrichelt dargestellt ist.

In Figur 2(B) ist dagegen der Abstand D zwischen dem eigenen Fahrzeug 34 und dem Zielobjekt 36 kleiner als der Minimalabstand Dₘᵢₙ In diesem Fall ist die Anzeigeeinrichtung 30 auf jeden Fall eingeschaltet, unabhängig von der Beziehung zwischen den Sollbeschleunigungen a und a_{f}.

Der Minimalabstand Dₘᵢₙ ist so klein gewählt, daß im Regelfall in absehbarer Zeit eine Reaktion des Reglers 26 auf das Zielobjekt erfolgen wird und daß außerdem das Zielobjekt 36 normalerweise stabil im Ortungsbereich des Radarsensors bleiben wird. So wird in den meisten Fällen das für den Fahrer irritierende Phänomen vermieden, daß die Anzeigeeinrichtung 30 kurz aufleuchtet und dann wieder erlischt, ohne daß irgendeine Reaktion des Abstandsregelsystems spürbar geworden ist.

Wenn der im Erfassungsmodul 24 definierte Maximalabstand Dₘₐₓ von der Kurvigkeit der Fahrbahn abhängig ist und der Minimalabstand Dₘᵢₙ wiederum eine monoton steigende Funktion von Dₘₐₓ ist, so ist auch Dₘᵢₙ von der Kurvigkeit der Fahrbahn abhängig und wird umso kleiner, je größer die Wahrscheinlichkeit ist, daß das Zielobjekt 36 aus dem Ortungsbereich des Radarsensors verloren geht.

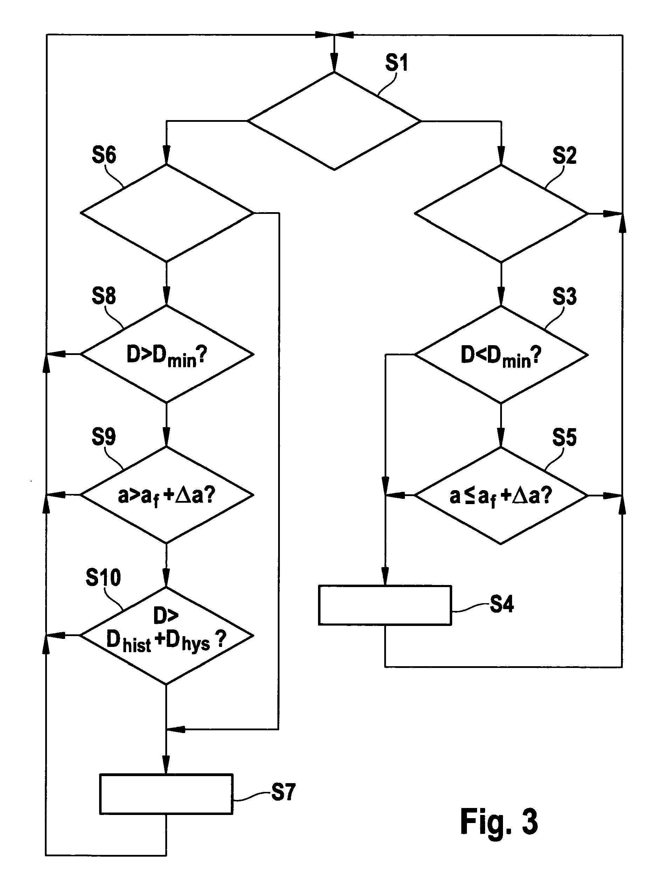

Figur 3 ist ein Flußdiagramm einer Programmroutine, die zyklisch in der Steuereinrichtung 28 ausgeführt wird, um das Ein- und Ausschalten der Anzeigeeinrichtung 30 zu steuern.

In Schritt S1 wird geprüft, ob die Anzeigeeinrichtung eingeschaltet ist. Wenn dies nicht der Fall ist, wird in Schritt S2 geprüft, ob das Erfassungsmodul 24 ein Zielobjekt erfaßt hat. Ist dies nicht der Fall, erfolgt ein direkter Rücksprung zu Schritt S1, und die Anzeige bleibt ausgeschaltet.

Wenn dagegen ein Zielobjekt erfaßt ist, wird in Schritt S3 geprüft, ob der Abstand D des Zielobjekts kleiner ist als der Minimalabstand Dₘᵢₙ. Wenn dies der Fall ist (wie in Figur 2(B)), wird in Schritt S4 die Zielobjektanzeige eingeschaltet. Andernfalls erfolgt in Schritt S5 die Überprüfung des Anzeigekriteriums, daß die Sollbeschleunigung a, die durch die dynamischen Parameter des Zielobjekts bestimmt ist, kleiner oder gleich der Summe aus der Sollbeschleunigung a_{f} für Freifahrt und einem Zuschlag Da ist. Wenn a kleiner ist als a_{f}, bedeutet dies, daß aufgrund der Minimumauswahl im Regler 26 die Abstandsregelung bereits wirksam ist. Liegt a dagegen zwischen a_{f} und a_{f} + DA, so ist die Abstandsregelung zwar noch nicht wirksam, sie wird jedoch alsbald wirksam werden, nämlich sobald die Sollbeschleunigung a, die bei Annäherung an das Zielobjekt weiter abnimmt, unter a_{f} sinkt.

Ist dieses Anzeigekriterium nicht erfüllt, erfolgt ein direkter Rücksprung zu Schritt S1. Andernfalls wird in Schritt S4 die Anzeige eingeschaltet, wonach mit Schritt S1 ein neuer Zyklus beginnt.

Wenn in Schritt S1 festgestellt wird, daß die Anzeige eingeschaltet ist, wird in Schritt S6 geprüft, ob nach wie vor ein Zielobjekt erfaßt ist. Wenn das Zielobjekt verloren wurde, beispielsweise in einer sehr engen Kurve, wird zu Schritt S7 verzweigt, und die Anzeige wird ausgeschaltet. Andernfalls bleibt die Anzeige eingeschaltet, und in Schritt S8 wird geprüft, ob D größer ist als der Minimalabstand Dₘᵢₙ. Ist dies nicht der Fall, erfolgt ein Rücksprung zu Schritt S1 und die Anzeige bleibt eingeschaltet. Andernfalls wird in Schritt S9 geprüft, ob die Verneinung des in Schritt S5 geprüften Anzeigekriteriums gilt. Wenn nein, wird wieder zu Schritt S1 verzweigt, und die Anzeige bleibt eingeschaltet.

Ist das in Schritt S5 definierte Anzeigekriterium nicht mehr erfüllt (Ergebnis "Ja" in Schritt S9), so wird in Schritt S10 zusätzlich geprüft, ob der aktuelle Abstand D des Zielobjekts größer ist als ein "historischer" Tiefstand Dₕᵢₛₜ vermehrt um einen gewissen Hystereseabstand D_{hys}. Zur Bestimmung von Dₕᵢₛₜ wird, beginnend mit dem Einschalten der Anzeige in Schritt S4, in jedem Meßzyklus des Ortungssystems 10 geprüft, ob der für das Zielobjekt gemessene Abstand D zu- oder abgenommen hat. Im Fall einer Abnahme wird der neue Abstandswert als aktueller Wert für Dₕᵢₛₜ in einem Register festgehalten. Das Register wird gelöscht, sobald in Schritt S7 die Anzeige ausgeschaltet wird. Die Prüfung im Schritt S10 hat zur Folge, daß die Anzeige, wenn sie einmal eingeschaltet wurde, so lange eigeschaltet bleibt, bis der Abstand des Zielobjekts (oder auch eines anderen Zielobjekts, das inzwischen an die Stelle des bisherigen Zielobjekts getreten ist) auf ein Minimum abgenommen und dann wieder mindestens um D_{hys} zugenommen hat.

Wenn der Fahrer nach dem Einschalten der Zielobjektanzeige z. B. die Zeitlücke verkleinert oder die Setzgeschwindigkeit verringert, so hat dies eine Zunahme der Sollbeschleunigung a bzw. eine Abnahme der Sollbeschleunigung a_{f} zur Folge, so daß die Abfrage in Schritt S9 positiv ausfiele. In diesen Fällen verhindert Schritt S10, daß die Anzeige zunächst ausgeschaltet und dann bei weiterer Annäherung an das Zielobjekt wieder eingeschaltet wird. Nur wenn auch das in Schritt S10 geprüfte Kriterium erfüllt ist, wird in Schritt S7 die Anzeige ausgeschaltet, bevor ein neuer Zyklus beginnt. Andernfalls erfolgt von Schritt S10 ein direkter Rücksprung zu Schritt S1.

## Patentansprüche

1. Abstandsregelvorrichtung für Kraftfahrzeuge,
- mit einem Ortungssystem (10) zur Ortung vorausfahrender Fahrzeuge,
- einem Erfassungsmodul (24) zur Erfassung eines georteten Fahrzeugs als Zielobjekt (36) für die Abstandsregelung,
- einem Regler (26) zur Regelung des Abstands zum Zielobjekt, und
- einer Anzeigeeinrichtung (30) mit zugehöriger Steuereinrichtung (28) zur Anzeige eines erfassten Zielobjekts,
- wobei die Steuereinrichtung (28) dazu ausgebildet ist, den Abstand (D) des Zielobjekts (36) und mindestens einen weiteren vom Ortungssystem (10) gemessenen dynamischen Parameter des Zielobjekts auszuwerten,
**dadurch gekennzeichnet, dass**
- der weitere dynamische Parameter oder einer der weiteren dynamischen Parameter die Relativgeschwindigkeit oder die Relativbeschleunigung des Zielobjekts (36) ist und
- dass die Steuereinrichtung (28) dazu ausgebildet ist, das Zielobjekt nur dann anzuzeigen wenn diese Parameter ein vorgegebenes Anzeigekriterium erfüllen, das darauf hindeutet, dass im Rahmen der Abstandsregelung wirklich ein Regeleingriff stattfindet oder kurz bevorsteht.

2. Abstandsregelvorrichtung nach einem der vorstehenden Ansprüche, **dadurch gekennzeichnet, daß** die Steuereinrichtung (28) dazu ausgebildet ist, mindestens eine vom Regler (26) berechnete Sollbeschleunigung (a, a_{f}) auszuwerten, die ihrerseits von den dynamischen Parametern des Zielobjektes (36) abhängig ist

3. Abstandsregelvorrichtung nach einem der vorstehenden Ansprüche, **dadurch gekennzeichnet, daß** die Steuereinrichtung (28) dazu ausgebildet ist, die Anzeigeeinrichtung (30) auf jeden Fall einzuschalten, wenn der Abstand (D) des Zielobjekts (36) kleiner ist als ein Minimalabstand (Dₘᵢₙ).

4. Abstandsregelvorrichtung nach Anspruch 3, **dadurch gekennzeichnet, daß** der Minimalabstand (Dₘᵢₙ) eine Funktion eines Maximalabstands (Dₘₐₓ) ist, den ein Fahrzeug höchstens haben darf, damit es vom Erfassungsmodul (24) als Zielobjekt erfaßt wird.

5. Abstandsregelvorrichtung nach einem der vorstehenden Ansprüche, **dadurch gekennzeichnet, daß** das Anzeigekriterium darin besteht, daß eine im Rahmen der Abstandsregelung erforderliche Sollbeschleunigung (a) kleiner ist als eine Beschleunigung (a_{f} + Dₐ), die von einer für eine Freifahrtsituation, ohne erfaßtes Zielobjekt, berechneten Sollbeschleunigung (a_{f}) abhängig ist

6. Abstandsregelvorrichtung nach einem der vorstehenden Ansprüche, **dadurch gekennzeichnet, daß** die Steuereinrichtung (28) eine Hysteresefunktion für das Ein- und Ausschalten der Anzeigeeinrichtung (30) aufweist.

7. Abstandsregelvorrichtung nach Anspruch 6, **dadurch gekennzeichnet, daß** die Steuereinrichtung (28) dazu ausgebildet ist, zumindest bei eingeschalteter Anzeigeeinrichtung (30) den Abstand (D) des Zielobjekts (36) zu verfolgen und den jeweils kleinsten Abstand (Dₕᵢₛₜ zu speichern und die Anzeigeeinrichtung (30) eingeschaltet zu halten, wenn der aktuelle Abstand (D) des Zielobjekts nicht mindestens um einen bestimmten Hystereseabstand (D_{hys}) größer ist als der gespeicherte kleinste Abstand (Dₕᵢₛₜ).

## Claims

1. Device for distance control for motor vehicles,
- having a location-determining system (10) for determining the location of vehicles travelling ahead,
- a detection module (24) for detecting a located vehicle as a target object (36) for the distance control,
- a controller (26) for controlling the distance from the target object, and
- a display device (30) with an associated control device (28) for displaying a detected target object,
- wherein the control device (28) is designed to evaluate the distance (D) of the target object (36) and at least one further dynamic parameter of the target object measured by the location-determining system (10),
**characterized in that**
- the further dynamic parameter or one of the further dynamic parameters is the relative speed or the relative acceleration of the target object (36), and
- **in that** the control device (28) is designed to display the target object only when these parameters meet a predefined display criterion which indicates that in fact a control intervention is taking place or is directly immanent within the scope of the distance control.

2. Device for distance control according to one of the preceding claims, **characterized in that** the control device (28) is designed to evaluate at least one set point acceleration (a, a_{f}) which is calculated by the controller (26) and is itself dependent on the dynamic parameters of the target object (36).

3. Device for distance control according to one of the preceding claims, **characterized in that** the control device (28) is designed to switch on the display device (30) in all cases if the distance (D) of the target object (36) is shorter than a minimum distance (Dₘᵢₙ).

4. Device for distance control according to Claim 3, **characterized in that** the minimum distance (Dₘᵢₙ) is a function of a maximum distance (Dₘₐₓ) at which a vehicle can be situated at maximum for it to be detected as a target object by the detection module (24).

5. Device for distance control according to one of the preceding claims, **characterized in that** the display criterion consists in the fact that a set point acceleration (a) which is necessary within the scope of the distance control is smaller than an acceleration (a_{f} + Dₐ) which is dependent on a set point acceleration (a_{f}) which is calculated for an unrestricted travel situation without a detected target object.

6. Device for distance control according to one of the preceding claims, **characterized in that** the control device (28) has a hysteresis function for switching the display device (30) on and off.

7. Device for distance control according to Claim 6, **characterized in that** the control device (28) is designed, at least when the display device (30) is switched on, to track the distance (D) of the target object (36) and to store the respective shortest distance (Dₕᵢₛₜ) and to keep the display device (30) switched on if the current distance (D) of the target object is not longer than the stored shortest distance (Dₕᵢₛₜ) by at least one specific hysteresis distance (D_{hys}).

## Revendications

1. Dispositif de régulation de distance pour véhicules automobiles,
- comprenant un système de localisation (10) pour la localisation des véhicules qui précèdent,
- un module de détection (24) pour détecter un véhicule localisé en tant qu'objet cible (36) pour la régulation de distance,
- un régulateur (26) pour réguler la distance par rapport à l'objet cible, et
- un dispositif d'affichage (30) muni d'un dispositif de commande (28) associé pour l'affichage d'un objet cible détecté,
- le dispositif de commande (28) étant configuré pour interpréter la distance (D) de l'objet cible (36) et au moins un paramètre dynamique supplémentaire de l'objet cible mesuré par le système de localisation (10),
**caractérisé en ce que**
- le paramètre dynamique supplémentaire ou l'un des paramètres dynamiques supplémentaires est la vitesse relative ou l'accélération relative de l'objet cible (36) et
- **en ce que** le dispositif de commande (28) est configuré pour n'afficher l'objet cible que lorsque ces paramètres remplissent un critère d'affichage prédéfini qui indique qu'une intervention de régulation a réellement lieu ou est imminente dans le cadre de la régulation de distance.

2. Dispositif de régulation de distance selon l'une des revendications précédentes, **caractérisé en ce que** le dispositif de commande (28) est configuré pour interpréter au moins une accélération de consigne (a, a_{f}) calculée par le régulateur (26), laquelle est de son côté dépendante des paramètres dynamiques de l'objet cible (36).

3. Dispositif de régulation de distance selon l'une des revendications précédentes, **caractérisé en ce que** le dispositif de commande (28) est configuré pour mettre en marche le dispositif d'affichage (30) dans tous les cas lorsque la distance (D) de l'objet cible (36) est inférieure à une distance minimale (Dₘᵢₙ).

4. Dispositif de régulation de distance selon la revendication 3, **caractérisé en ce que** la distance minimale (min) est une fonction d'une distance maximale (Dₘₐₓ) qu'un véhicule est autorisé à avoir au maximum pour qu'il soit détecté en tant qu'objet cible par le module de détection (24).

5. Dispositif de régulation de distance selon l'une des revendications précédentes, **caractérisé en ce que** le critère d'affichage consiste **en ce qu'**une accélération de consigne (a) nécessaire dans le cadre de la régulation de distance est inférieure à une accélération (a_{f} + Dₐ) qui est dépendante d'une accélération de consigne (a_{f}) calculée pour une situation de libre circulation, sans objet cible détecté.

6. Dispositif de régulation de distance selon l'une des revendications précédentes, **caractérisé en ce que** le dispositif de commande (28) présente une fonction d'hystérésis pour la mise en marche et l'arrêt du dispositif d'affichage (30).

7. Dispositif de régulation de distance selon la revendication 6, **caractérisé en ce que** le dispositif de commande (28) est configuré pour suivre la distance (D) de l'objet cible (36), au moins lorsque le dispositif d'affichage (30) est mis en marche, et pour mettre en mémoire la distance à chaque fois la plus petite (Dₕᵢₛₜ), et pour maintenir le dispositif d'affichage (30) en marche lorsque la distance (D) actuelle de l'objet cible n'est pas supérieure d'au moins une distance d'hystérésis déterminée (D_{hys}) à la distance la plus petite (Dₕᵢₛₜ) mise en mémoire.
